# EUROPEAN PATENT APPLICATION

(11) **EP 4 625 956 A2**
(43) Date of publication of application: **01.10.2025**
(21) Application number: 25191068.3
(22) Date of filing: 09.12.2021
(51) Int. Cl.: H04M 3/487

(54) **OPTIMIZING DISPLAY OF CALLER IDENTITY ON COMMUNICATION DEVICES**

(30) Priority: 09.12.2020 US 202017116160
(62) Divisional of application: 21213502.4
(71) Applicant: Neustar, Inc., Reston, VA 20190 (US)
(72) Inventor: TORREY, Jason, Reston, 20190 (US); SENA, Guido Jonjie S., Jr., Reston, 20190 (US); SHARMA, Gaurav, Reston, 20190 (US)
(74) Representative: Mathys & Squire

(57) **Abstract**

Disclosed herein are systems and methods for providing optimal branded content to end consumers. The approach takes into account the different available branded display contents that are available, the different metrics that can drive choices, the technological parameters that can influence the provisioning of the branded display content. In addition, the preferences of the end consumer may also influence the provisioning of the branded display content.

## Description

### FIELD

The present disclosure relates generally to telecommunications, and more specifically to managing the display of content on a communication device in a consumer communication.

### BACKGROUND

Historically, communications from businesses to their consumers were relatively unexciting, with only the ringing of a bell to indicate an incoming call, the communications channel being audio, and the technical quality of the call being determined by the nature of the audio connection. Modern communications systems have evolved to where nearly everyone has a smart phone on their person at all times with more power and communications features than desktop computers only a decade ago. However, some of these technology advancements have led to the unfortunate growth in spam and other undesirable communications. At the opposite end of the spectrum, technology may open the door to opportunities whereby technology may be harnessed for superior engagement with the end consumers.

### SUMMARY

Aspects and advantages of embodiments of the present disclosure will be set forth in part in the following description, or may be learned from the description, or may be learned through practice of the embodiments.

One example aspect of the present disclosure is directed to a computer-implemented method for providing enterprise branding information to accompany a call to a consumer. The method includes receiving from an enterprise an indication of a requested communication between the enterprise and a communications device associated with a consumer of the enterprise. The method further includes selecting from a database, branding elements associated with the enterprise, the selecting being based at least in part on characteristics of the consumer. The method also includes selecting a communications channel for provision of the branding elements based on a rule. The method further includes sending the branding elements to the communications channel for rendering on the communications device with the requested communication. In some embodiments, the selecting branding elements, the selecting the communications channel, and the sending are performed in response to receiving the indication of the requested communication between the enterprise and the communications device associated with the consumer of the enterprise.

Other aspects of the present disclosure are directed to systems, apparatus, tangible, non-transitory computer-readable media, user interfaces and devices for providing enterprise branded information to a consumer.

These and other features, aspects, and advantages of various embodiments will become better understood with reference to the following description and appended claims. The accompanying drawings, which are incorporated in and constitute a part of this specification, illustrate embodiments of the present disclosure and, together with the description, serve to explain the related principles.

This Summary is provided merely for purposes of reviewing some exemplary embodiments, so as to provide a basic understanding of some aspects of the subject matter described herein. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE FIGURES

Detailed discussion of embodiments directed to one of ordinary skill in the art is set forth in the specification, which makes reference to the appended figures, in which:
FIG. 1 depicts an example system, according to example embodiments of the present disclosure;
FIG. 2 depicts an exemplary communication device, according to example embodiments of the present disclosure;
FIG. 3 depicts exemplary display interfaces, according to example embodiments of the present disclosure;

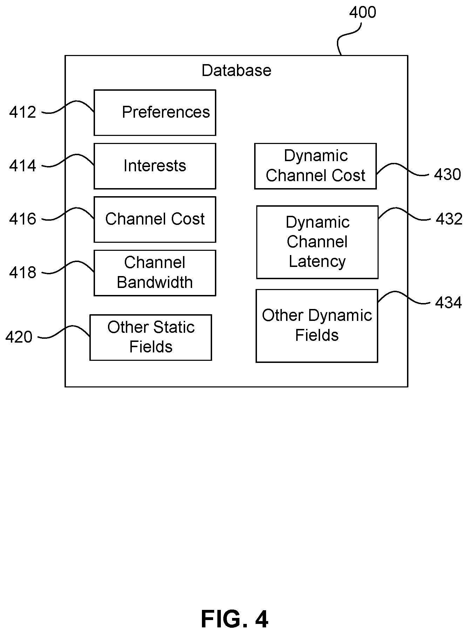

FIG. 4 depicts an example database system according to example embodiments of the present disclosure;
FIG. 5 depicts a flow diagram for providing enterprise branded information to accompany communications, according to example embodiments of the present disclosure;
FIG. 6 depicts an example telephone device according to example embodiments of the present disclosure; and
FIG. 7 depicts an example computing system according to example embodiments of the present disclosure.

### DETAILED DESCRIPTION OF THE INVENTION

Reference will now be made in detail to embodiments, one or more examples of which are illustrated in the drawings. Each example is provided by way of explanation of the embodiments, not limitation of the invention. In fact, it will be apparent to those skilled in the art that various modification and variations can be made to the embodiments without departing from the scope or spirit of the present disclosure. For instance, features illustrated or described as part of one embodiment can be used with another embodiment to yield a still further embodiment. Thus it is intended that aspects of the present disclosure cover such modifications and variations.

Example aspects of the present disclosure are directed to the presentation of a business brand to an end consumer during a telephone call. Technology is described that permits a wide variety of outcomes that may be beneficial to the business originating the telephone call. For example, the business may wish to offer different brand displays based on one or more inputs. Such inputs include the type of brand display, a priori knowledge of the end consumer, the type of phone in use by the end consumer, the different channels available for connection between the business and the end consumer, and a metric that reflects the amount of resource available to support the branding for the call.

### Overall System and Operating Scenarios

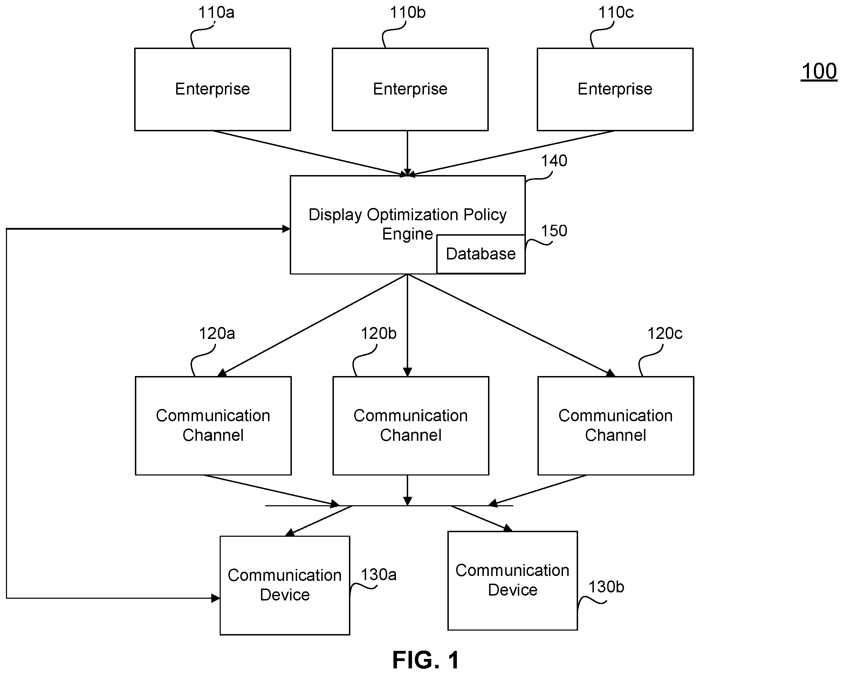

Referring now to the drawings, FIG. 1 depicts an example system 100 according to example aspects of the present disclosure. System 100 includes one or more enterprises 110a, 110b, 110c, who have a need to place telephone calls to consumers, including consumers having end user communication devices 130a, 130b. In a conventional approach, enterprise 110a would simply dial the telephone number of end user communication device 130, e.g., 130a. End user communication device 130 would be notified of the incoming call, and in some conventional approaches, caller ID may be available to indicate to the consumer the telephone number of the originating caller. In some cases, the identity of the originating caller may also be made known to the consumer. Based on this information, the consumer associated with end user communication device 130 may choose to answer the call or choose to ignore the call. In initiating the call, enterprise 110a chooses the communication carrier (AT&T, Verizon, etc.) for the telephone call to the consumer. In a conventional arrangement, the choice of the communication carrier by enterprise 110a is previously determined prior to a particular call to an end user communication device 130. In some situations, enterprise 110a contracts with one or more communications carriers 120 based on business models offered by the communications channels 120 including rate, volume, redundancy, and other factors. In certain embodiments of the approach described herein, a plurality of communication channels 120 are available, enterprise 110 is not beholden to any particular communication channel 120, but has a choice of which communication channel 120 to effect a call with a consumer.

As noted above, technology has advanced over historical telephone communications, but to many consumers such advancements have changed consumer behavior to where they are less and less likely to answer their phones. Insight from the inventors has recognized that technology may be harnessed to provide useful solutions that enhance business telephone calls or messages to consumers. For example, using embodiments of the approaches described herein, businesses can utilize a technological solution that can present themselves to an end consumer in a context that is conducive to improve answer rates and restore trust. At a minimum, various aspects of the approaches herein offer the opportunity for businesses to distinguish themselves over spam. In other aspects, an optimal engaging manner for the call or messaging may be provided, given the many telecommunications opportunities, the associated constraints and the preferences of consumers.

In accordance with various aspects of this disclosure, the contact between enterprise 110a and the consumer may benefit from providing branding information in support of a telephone call to end user communication device 130. In certain embodiments, Display Optimization Policy Engine 140 provides connectivity between enterprises 110a, 110b and 110c and a series of communication channels 120a, 120b, 120c. Some or all of communication channels 120a, 120b, 120c may provide communication connectivity to end user communication device 130. Display Optimization Policy Engine 140 chooses what, if any, branding information is to be forwarded to end user communication device 130. Display Optimization Policy Engine 140 provides the logic capability to select one of communication channels 120a, 120b, 120c for delivery of the chosen branding information to end user communication device 130. In various embodiments, communication channels 120a, 120b, 120c may include PSTN connections, SMS (short message service), MMS (multimedia messaging service), and internet-based connectivity. In certain embodiments, Display Optimization Policy Engine 140 simultaneously chooses the branding information and the communication channel based on an optimal choice that accounts for a tradeoff between the set of branding available and the communication channels available.

In various embodiments, Display Optimization Policy Engine 140 employs a comprehensive rules engine that takes inputs from enterprise 110, communication channels 120, communication device 130, and existing data within Display Optimization Policy Engine 140 (including database 150). From these inputs, Display Optimization Policy Engine 140 chooses the communications path to communication device 130, and chooses the branding elements to accompany the communication with communication device 130. In an exemplary operating scenario, enterprise 110a wishes to place a telephone call to end user communication device 130, and indicates this to Display Optimization Policy Engine 140. Display Optimization Policy Engine 140 provides a rule-based decision engine that selects branded information to accompany the communication to end user communication device 130. Display Optimization Policy Engine 140 may select the branded information based at least in part on the terminating telephone number of end user communication device 130. Display Optimization Policy Engine 140 is coupled to database 150, which stores the a set of branding elements that are available to send, including an indication that no information is to be sent, or that a caller ID information is to be sent. Display Optimization Policy Engine 140 provides a rule-based decision engine that selects the communication channel to use for the communication to end user communication device 130. Database 150 includes information concerning the capabilities of each of communication channels 120a, 120b, 120c. Such capabilities include the bandwidth, the relative cost, the latency and/or other parameters that characterize the relevant characteristics of the communication channel. More broadly, the relevant characteristics include business, financial and operational characteristics. In an embodiment, the information concerning the capabilities of each of communication channels 120a, 120b, 120c is real-time information. In this embodiment, real-time information concerning the capabilities of each of communication channels 120a, 120b, 120c is continually updated, and stored in database 150.

In a scenario, enterprise 110a wishes to make a simple base level-of-service telephone call to end user communication device 130. In initiating the telephone call, enterprise 110a provides the telephone number of end user communication device 130 to Display Optimization Policy Engine 140. Display Optimization Policy Engine 140 has also received input from enterprise 110a that the telephone call is a basic "bare bones" call. Accordingly, Display Optimization Policy Engine 140 may select that no branding information is to be sent, or that a simple "text only" caller ID information is to be sent. Display Optimization Policy Engine 140 also selects from communication channels 120a, 120b, 120c the channel that satisfies the optimal choice of the one or more criteria - in this case, a minimal cost for making the "bare bones" call connection. The call is then completed in the conventional manner.

In a further scenario, enterprise 110a wishes to make a more sophisticated "branded" telephone call to end user communication device 130. In initiating the telephone call, enterprise 110a provides the telephone number of end user communication device 130 to Display Optimization Policy Engine 140. Display Optimization Policy Engine 140 has also received input from enterprise 110a that the telephone call is to be accompanied by a particular branding design. Display Optimization Policy Engine 140 selects from communication channels 120a, 120b, 120c the channel that satisfies the optimal choice of the one or more criteria - for example, an optimal cost that can carry the particular chosen branding design. In a further aspect of this scenario, the criteria may also include a desired maximum latency of providing the branding design to end user communication device 130. Here smaller latency is preferred so that the branding design reaches the telephone of end user communication device 130 no later than a particular predetermined period of time (e.g., before the communication device begins alerting the consumer). By using such a latency criterion, the value of the presentation of the branding design to end user communication device 130 is maximized.

In a still further scenario, enterprise 110 wishes to make a more sophisticated (more sophisticated that the base level-of-service discussed above) telephone call to end user communication device 130. In initiating the telephone call, enterprise 110a provides the telephone number of end user communication device 130 to Display Optimization Policy Engine 140. Display Optimization Policy Engine 140 has already received input that the telephone call is to be accompanied by one of a number of branding possibilities. The selection of one of those possibilities may be determined based on the real-time cost metric from each of communication channels 120a, 120b, 120c. The communication channel that satisfies the optimal choice of the one or more criteria - in this case, an optimal choice of branding design and cost is made by Display Optimization Policy Engine 140. In a further aspect of this scenario, the criteria may also include the desired maximum latency of providing the branding design to end user communication device 130. Smaller latency is preferred so that the branding design reaches the telephone of end user communication device 130 no later than a particular predetermined period of time. By using such a latency criterion, the value of the presentation of the branding design to end user communication device 130 is maximized.

In yet another scenario, enterprise 110 wishes to just make a more sophisticated telephone call to end user communication device 130. In initiating the telephone call, enterprise 110a provides the telephone number of end user communication device 130 to Display Optimization Policy Engine 140. In this scenario, Display Optimization Policy Engine 140 has knowledge of certain inputs from end user communication device 130. For example, end user communication device 130 may have communicated its requirements concerning receiving branding designs that accompany telephone calls. Such requirements may be the result of the type of telephone that end user communication device 130, such as a basic telephone that may not accept branding designs. These requirements may also be the result of personal choices of end user communication device 130 that are communicated either to Display Optimization Policy Engine 140 directly, or to enterprise 110a. Such personal choices may be a desire to limit data receipt (effectively limiting branding to text), or a desire to not receive branding logos that fall into certain subject categories. Such categories could include disfavored content, such as for general audiences, mature audiences, etc.

In the scenarios above, communication channels 120a, 120b, 120c have been described in terms of their features/capabilities, such as latency, bandwidth, and cost. In an embodiment, and knowing the features/capabilities of the potential communication channels 120, Display Optimization Policy Engine 140 chooses the best experience for the requested communication between enterprise 110 and communication device 130. Such best experience includes selection of communication channel 120 that provides for the most branding elements being forwarded to communication device 130. In another scenario, such best experience includes taking into account the device characteristics of communication device 130, when making the selection of communication channel 120 that provides for the most branding elements being forwarded to communication device 130. In various embodiments, communication channels 120a, 120b, 120c may also act as publishers, since they may introduce content changes in the passage of branding logo through to end user communication device 130. Such content changes may be the direct result of a bandwidth limitation (i.e., reducing rich content to basic text, with a resulting reduction of branding log content to a base level of service). Still other content changes may be the result of real-time limitations, such as a video may be reduced in frame speed, bit rate to cater to other objectives. In still other situations, communication channels 120a, 120b, 120c may provide transmission of the selected branding logo at a very attractive cost, but with the introduction of its own branding logo.

In various embodiments, the call between enterprise 110 and end user communication device 130 may take various forms. As noted above, the call may be a telephone call. In other embodiments, the call may be text or video message, or an internet-connected call, such as a Voice Over IP (VoIP) (e.g., Skype) or similar communication.

### Enterprises

As illustrated in FIG. 1, calls originate from an enterprise 110a, 110b, 110c. In certain embodiments, enterprise 110a enters into an arrangement to have a branded call display service provided by Display Optimization Policy Engine 140. In such an arrangement, instead of placing an outgoing telephone call directly with a communications carrier, enterprise 110a initiates the call to Display Optimization Policy Engine 140 by providing the telephone number of the intended recipient of the call. Based on a rule-based algorithm, Display Optimization Policy Engine 140 selects the branding information, if any, to accompany the call and selects the communications channel 120 to forward the call, with the included branding information.

In certain embodiments, enterprise 110 may provide an indication of a call to a consumer to Display Optimization Policy Engine 140, which then makes a selection of the branding elements to accompany the call. Enterprise 110 completes the call via one of communications channels 120 to end user communication device 130, with the selected branding elements accompanying the call in either the same communications channel 120 as the call, or in a separate, parallel communications channel 120 to end user communication device 130. In certain other embodiments, enterprise 110 may provide an indication of a call to a consumer to Display Optimization Policy Engine 140, which then makes a selection of the branding elements to accompany the call. Rather than enterprise 110 completing the call via one of communications channels 120 to end user communication device 130, Display Optimization Policy Engine 140 completes the call via one of communications channels 120 to end user communication device 130 with the selected branding elements accompanying the call in either the same communications channel 120 as the call, or in a separate, parallel communications channel 120 to end user communication device 130.

### Consumer Communication Device

As illustrated in FIG. 1, an outgoing call from enterprise 110a is intended for a consumer having end user communication device 130. In an embodiment, end user communication device 130 can correspond to a mobile computing device which includes wireless broadband and cellular connectivity for enabling voice and data network functionality. In other embodiments, end user communication device 130 can correspond to any device which can receive incoming telephone calls. According to other examples, the end user communication device 130 can correspond to any device which can receive messages, such as SMS or MMS messages. Still further, in some examples, the end user communication device 130 can display caller information, in connection with phone and messaging services provided on that computing device. By way of example, the end user communication device 130 can include a mobile computing device having capabilities for receiving (and initiating) phone calls over a cellular connection (e.g., voice channel), PSTN connection and/or IP connection. In some variations, the end user communication device 130 can include a mobile computing device having capabilities for receiving messages (e.g., SMS or MMS messages) over a cellular or IP network channel. Such mobile computing devices may also perform other types of operations, such as data network operations (e.g., Internet browsing) using a Wireless Fidelity (e.g., 802.11(a), 802.11(b), 802.11(g), 802.11(n), Wi-Fi Direct, etc.) or cellular connection. In variations, the end user communication device 130 can be implemented under alternative computing platforms, such as either a personal computer (e.g., desktop or laptop computer), a dedicated telephony device with data network connectivity, or a cable box or service with Voice-Over Internet Protocol ("VoIP") telephony.

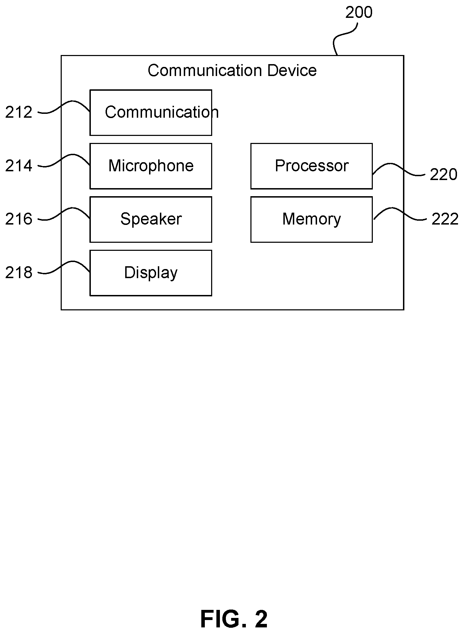

Referring to FIG. 2, an exemplary end user communication device 130 is illustrated by communication device 200. Communication device 200 includes processor 220, memory 222, communication module 212, microphone 214, speaker 216 and display 218. In various embodiments, display 218 may include text-only displays, liquid crystal device (LCD) displays, touchscreen displays, and other displays that provide a visual communication of information relevant to the call. Additionally, the communication device 200 can include one or more kinds of memory resources, such as provided by operating system memory (such as Read Only Memory or "ROM")) and application memory (such as Random Access Memory or "RAM"). The communication module 212 can enable one or more of the following: cellular voice communications, high-bandwidth wireless (or network) communication suitable for Internet protocol ("IP") data communication applications and resources (e.g., an 802.11 protocol, or "Wi-Fi"). Still further, the communication module 212 can also be used for voice communications using a wireless medium such as Wi-Fi. For example, some service providers can enable voice or data communications through non-cellular wireless communication ports (e.g., cellular service providers can enable voice calls to be received or made through a Wi-Fi connection). In some implementations, the selection of the particular communication port can be made dependent on the factors such as the device location, the device's connection quality or strength through the respective communication ports, user preference, device software or hardware resources, or other considerations. In other variations, the communication module 212 can enable both voice and data communications for purpose of implementing an example of communication device 200. Thus, in implementation, communication device 200 can have more or fewer communication ports, with each communication being enabled for voice, data or voice and data. Moreover, one or more additional communication ports can be included with communication device 200 for enabling communications using alternative wireless or wireline communication mediums. Communication device 200 may include mobile phones, landline phones, and other devices which afford communication via an identifying number (e.g., telephone number) such as Echo, Alexa and other like personal assistance devices.

In an example of FIG. 1, the end user communication device 130 may execute instructions for operating a telephone application. As an addition or alternative, the end user communication device 130 executes the instructions for operating a messaging application (e.g., SMS application).

In operation, the end user communication device 130 receives an incoming communication. The incoming communication may be an incoming call or a new message. The incoming communication may be received on the end user communication device 130 via, for example, communication channels 120. In some examples, the incoming communication is a telephone call, and the content information is obtained and displayed to augment or replace, for example, conventional caller identifier information. In variations, the incoming communication is a new message, and the contact information is obtained and displayed as part of, for example, a text message, or a message header or identifier when the message is listed in a folder (e.g., inbox) or opened for viewing. As described in greater detail, the content information may include rich content (e.g., logos and images, text, textual information about the contact, etc.) that is created and/or configured by the contact. In this way, Display Optimization Policy Engine 140 enables enterprises 110 who are owners or holders of communication identifiers to specify content information that is displayed on their behalf when those enterprises perform a corresponding communication activity (e.g., make a phone call, send a message). Furthermore, the rendering of the content information on the end user communication device 130 provides confirmation to the receiver regarding the identity of the contact who is responsible for the incoming communication.

In implementations which display caller contact information, end user communication device 130 can receive the content information from Display Optimization Policy Engine 140 when the incoming call is received. The content information can be rendered while, for example, an incoming call is pending on the end user communication device 130. In some implementations, caller content information is rendered on the end user communication device 130 before the call is made known (e.g., a ring tone) to the user, or alternatively, before the call is answered. The processor 110 receives the caller information via the communications module 212, and then renders the caller content. The caller content can be based on or derived from the caller content information provided via communication module 212. The caller content can be rendered as text or media using the display 218. In variations, the caller content can be generated in whole or in part as audio output.

In some embodiments, end user communication device 130 may include a plurality of communications devices, where each of the plurality communications device being associated with the consumer. For example, a consumer may have an iPhone, an iPad and an Apple Watch, all of which are configured to be associated with the consumer. A call placed to this consumer may be received at all of these devices, and branding elements may be rendered on all of these devices. In some embodiments, branding elements that are rendered on each device during a particular call may be selected individually for each device, or the same selection may be applicable across all devices.

In other embodiments, whether there by one or multiple end user communication devices 130 associated with a particular consumer, more than one communications channel 120 may be selected for provisioning of the branding elements to the end user communications device(s) 130. Such embodiments include provisioning that is distributed across the multiple communications channels 120 based on additional sub-rules within a composite rule. Such embodiments also include provisioning that is distributed across the multiple communications channels 120 such that a different communications channel is used for each end user communications device 130, again using sub-rules within a composite rule.

### Display

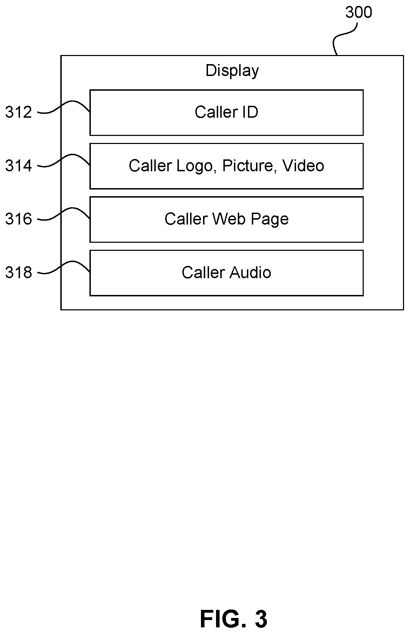

As illustrated in FIG. 2, display 218 may provide a rendering of the provided branded information upon receipt of an incoming call. FIG. 3 illustrates some examples of the displayed branded information that may accompany the incoming call, in accordance with various embodiments of the approach described herein. In one embodiment, no information would be provided to accompany the incoming call. In another embodiment, a text-based caller ID would be provided to accompany the incoming call. In yet another embodiment, a caller logo, a caller-selected picture, or a caller-selected video is provided to accompany the incoming call. In a still further embodiment, a web page may be provided to accompany the incoming call. In certain embodiments, the web page may be used by the recipient of the call to interactively communicate with enterprise 110a during and/or after the incoming call. In yet another embodiment, a special audio sound (or sounds, e.g., a tune) may also accompany the incoming call.

### Display Optimization Policy Engine and Database

Upon initiating of a telephone call from an enterprise 110 to a consumer with end user communication device 130, enterprise 110 provides an indication of the outbound call to Display Optimization Policy Engine 140. From the indication of the outbound call, Display Optimization Policy Engine 140 selects the communications channel 120 to complete the call with end user communication device 130, and also decides on the choice of branded information to be forwarded to end user communication device 130. The choice of branded information is made by Display Optimization Policy Engine 140. Display Optimization Policy Engine 140 uses a rule-based decision engine that selects the branded information to accompany the call to end user communication device 130.

Choice of branded information may depend on one or more factors, including the factors associated with either end of the call, as well as factors associated with connectivity elements such as the communications channels. With respect to the factors associated with the originating end of the call, such factors include the originating telephone number, and thereby the enterprise that initiated the call, since the enterprise will provide a set of branding elements from which a selection will be made for the particular call. At the terminating end of the call, such factors include the terminating telephone number of the end user communication device 130, and information related to the consumer associated with the end-user communication device 130. For example, end user communication device 130 may have certain capabilities that either permit or do not permit certain selected branding elements from being rendered. Similarly, the consumer may have recorded preferences that are accessible to Display Optimization Policy Engine 140 that influence the choice of selected branding elements, e.g., preferences to not receive branding elements at all due to use of bandwidth and the like, preferences to not receive branding elements associated with certain types of organizations (e.g., political organizations, certain industries with a mixed reputation and the like). With respect to factors associated with connectivity elements such as the communications channels, these include the following: time of the call, cost of the call, date of call, bandwidth in the available communications channels.

When there is more than one communication channel 120 to end user communication device 130, that choice may also be made by Display Optimization Policy Engine 140. Parameters that drive the rule-based decision engine include such metrics as the bandwidth, the relative cost, the latency of each of the communication channels. In an embodiment, the latency represents the delay in displaying the provided branded information, as measured from the first audio ring. In other embodiments, latency may be the delay in making the connection between Display Optimization Policy Engine 140 and communication channel 120. In still other embodiments, latency may be the delay in making the connection between Display Optimization Policy Engine 140 and communication device 130, via communication channel 120. In some embodiments, the parameters concerning the capabilities of each of communication channels 120a, 120b, 120c are static information. In other embodiments, the parameters concerning the capabilities of each of communication channels 120a, 120b, 120c are real-time information.

Display Optimization Policy Engine 140 is coupled to database 150, which stores information, including the information used by Display Optimization Policy Engine 140 to select both the branding content and the communications channel 120 to place the call (or message) to end user communication device 130. Thus database 150 can be implemented in order to provide a database service for providing content associated the provision of branded content for one or more enterprises 110. When implemented in connection with telephony services, the database 150 provides content information that is ultimately provided to the end user communication device 130 when the end user communication device 130 receives an incoming call. When implemented in connection with messaging services, the database 150 may also provide content information that is ultimately provided to the end user communication device 130 when the end user computing device 130 receives a new message. According to one aspect, database 150 can store two types of fields, static fields and dynamic fields. Static fields include information (e.g., interests, preferences) associated with telephone numbers of prospective recipients of calls, the one or more branding information components that are available to accompany the call. Static fields may be input manually or by a regularly scheduled upload of information. Static fields may also include, for each communications channel, the cost of the call when routed via each communications channel, the cost of providing the accompany branding information for each communications channel, the default latency times for each communications channel. Dynamic fields capture information that changes more rapidly than information that would be normally associated with a manual input, or a scheduled upload. For example, communications channel conditions can vary during a given 24-hour period based on traffic and other operational conditions. Thus, the cost of the call when routed via each communications channel, the cost of providing the accompany branding information for each communications channel, and the latency times for each communications channel may change during the day. Accordingly, real-time information on metrics of one or more communications channel may be provided by the one or more communications channel to database 150. Decisions by Display Optimization Policy Engine 140 may in turn be based on the up-to-date information in database 150.

Display Optimization Policy Engine 140 makes selections based on rules together with the various inputs. As noted above, the inputs include factors associated with either end of the call, as well as factors associated with connectivity elements such as the communications channels. Some or all of these inputs are stored in database 150. Rules that are implemented Display Optimization Policy Engine 140 include rules that reflect technical and business objectives. For example, in one rule, branded content is selected based on factors associated with either end of the call, as well as factors associated with connectivity elements such as the communications channels. This may be applicable when calling a consumer where the enterprise has multiple divisions, and the enterprise wishes to forward the logo of the division that is relevant to the particular consumer. In another example, and in another rule, branded content with a short shelf life (e.g., a special offering to long-time customers) may be forwarded to particular customers (e.g., those whose account characteristics indicate the interest of the customer) at the time of the call. In another example, a rule would choose particular branded content that takes into account the cost of provided the branded content in conjunction with the call to the consumer. For example, there may be a total budget for provision of such branded content, and the remaining budget may be used in conjunction with the cost to determine whether to send the particular branded content, or other branded content with a different cost impact. In another example, a rule would choose a particular communication channel based on one or more of cost, on latency, or on available bandwidth in forwarded the branded content to the consumer. In another rule, different communication channels may impose their own publishing restrictions on branding content. Thus, a publishing restrictions of a particular communications channel that reduces the bit content of a logo may not be chosen in a situation of a logo that requires high fidelity transfer for proper recognition by a consumer. In still other rules, a rule may apply a combination of the above rules to achieve an optimum based on cost, latency, bandwidth, etc. Such rules may be implemented based on static inputs, or on real-time inputs that reflect actual operational considerations at a particular time of the telephone call (or message) to the consumer. In a further rule example, Display Optimization Policy Engine 140 may be aware of the technical limitations of end user consumer device 130, and the choice of branded content is based on these technical limitations. In a still further rule example, Display Optimization Policy Engine 140 may be aware of the preferences of the consumer owning end user consumer device 130, and the choice of branded content is based on these preferences. For example, the consumer may have previously used an application on the end user consumer device 130 to make Display Optimization Policy Engine 140 aware that the consumer has no interest in receiving branded content associated with last minute deals, political polling, or college loans. In this example, a rule would preclude provision of such branding content in conjunction with a call to that consumer.

In further embodiments, Display Optimization Policy Engine 140 may receive feedback information on the success of communications with communication device 130 when certain branded content is used. In some scenarios, success may be measured based on call answer rate, call rejection rate, call blocking, call duration, call-back rate in response to voice mail, end-user feedback and/or similar metrics. In certain scenarios, such feedback information is provided in real-time to Display Optimization Policy Engine 140. Such feedback may be provided to Display Optimization Policy Engine 140 by communication carrier 120, using an integration of relevant systems or using some other feedback path. In other scenarios, such feedback may be provided to Display Optimization Policy Engine 140 by a direct connection between Display Optimization Policy Engine 140 and communication device 130. Such direct connection may include use of an application (e.g., software development kit (SDK)) on communication device 130 that communicates, including feedback information, with Display Optimization Policy Engine 140. The application may also allow communication device 130 to communicate to Display Optimization Policy Engine 140 device characteristics and the preferences (interest in receiving branding content, choices to accept/block certain types of incoming calls) of the consumer using communication device 130. Using such feedback information on the success of communications with communication device 130 when certain branded content is used, Display Optimization Policy Engine 140 may adjust the choice of branded content. Such adjustment may be achieved by optimization routines, machine learning techniques, and other adaptive approaches that use feedback information to further enhance the success of client communication.

In other embodiments, Display Optimization Policy Engine 140 may also provide an additional role in environments where it monitors branded content in use by a number of enterprises 110. Using its knowledge of the set of branding elements for each enterprise 110, Display Optimization Policy Engine 140 may detect use of a branding element by one enterprise 110 that is similar to a branding element in use by another enterprise 110. Such concerns encompass inadvertent use, spoofing and misappropriation of another's branding elements, or similarities thereof. Such similarity may be determined by a comparison of the elements to be within a threshold (e.g., same or similar characters in the case of a text-based branding element, same or similar pixels in certain locations in the case of logos, same or similar frames in the case of videos). Determination of similarity may also use algorithms known by one of ordinary skill in the art, including machine learning and/or artificial intelligence. Determination of similarity may also include alerting a human operator to make a final decision on the similarity.

In other embodiments, Display Optimization Policy Engine 140 may use a rule that includes logic based on artificial intelligence-based decision making or learned experiences. Such embodiments may capture the learned experiences in database 150.

### Methodology

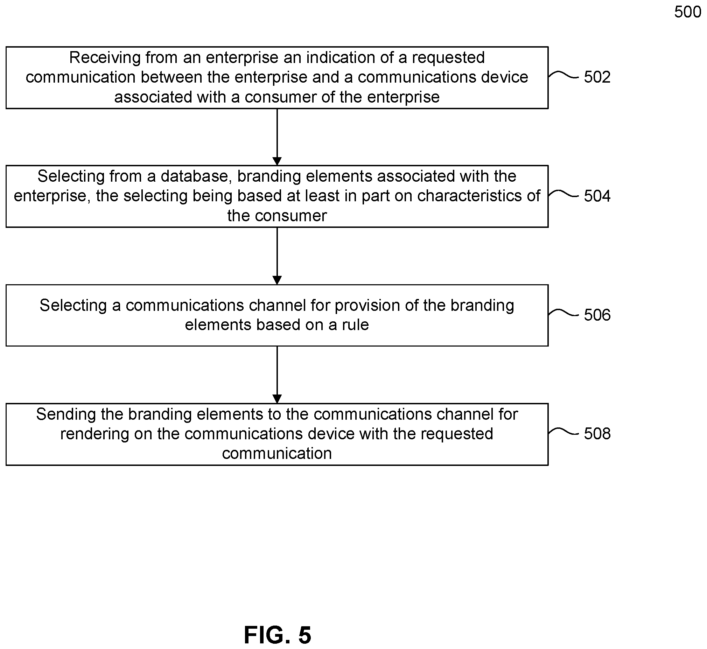

FIG. 5 depicts a flow diagram of an example method 300 of providing branded content to a consumer according to example aspects of the present disclosure. For instance, at (502), the method (500) can include receiving from an enterprise an indication of a requested communication between the enterprise and a communications device associated with a consumer of the enterprise. For example, an enterprise may be enterprise 110a, and a communication device may be communication device 130, as discussed above.

At (504), the method (500) includes selecting from a database, branding elements (branded display content) associated with the enterprise, the selecting being based at least in part on characteristics of the consumer. An example of the database may be database 150, as discussed above.

At (506), the method (500) includes selecting a communication channel for provision of the branding elements (branded display content) based on a rule. An example of a communications channel may be communications channel 120a, as discussed above.

At (508), the method (500) includes sending the branded display content to the communications channel for rendering on the communications device with the requested communication. In some embodiments, the selecting branding elements, the selecting the communications channel, and the sending are performed in response to receiving the indication of the requested communication between the enterprise and the communications device associated with the consumer of the enterprise.

### Other Communication Devices

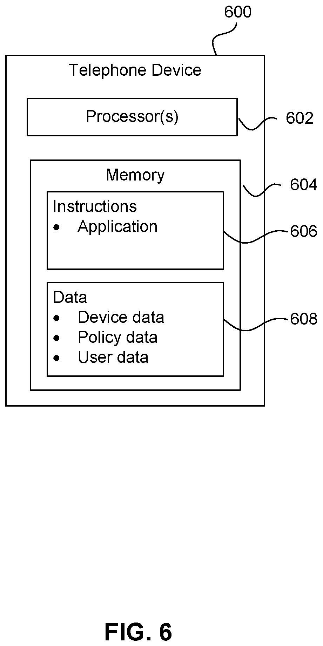

FIG. 6 depicts an example telephone device 600 that can be used with the methods and systems of the present disclosure. Telephone device 600 can include one or more processor(s) 602 and a memory 604. The one or more processor(s) 602 can include one or more central processing units (CPUs), and/or other processing devices. The memory 604 can include one or more computer-readable media and can store information accessible by the one or more processors 602, including instructions 606 that can be executed by the one or more processors 602, and data 608. The data 608 can include device data, policy data, user data, and other data. The telephone device 600 can store further instructions for implementing further functionality according to example aspects of the present disclosure.

The telephone device 600 can include various input/output devices for providing and receiving information from a user, such as a touch screen, touch pad, data entry keys, speakers, and/or a microphone suitable for voice recognition. For instance, the telephone device 600 can have a display for presenting a user interface to a user.

The telephone device 600 can further include a positioning system. The positioning system can be any device or circuitry for determining the position of remote computing device. For example, the positioning device can determine actual or relative position by using a satellite navigation positioning system (e.g. a GPS system, a Galileo positioning system, the GLObal Navigation satellite system (GLONASS), the BeiDou Satellite Navigation and Positioning system), an inertial navigation system (e.g. using positioning sensors, such as an inertial measurement unit), a dead reckoning system, based on IP address, by using triangulation and/or proximity to cellular towers, Bluetooth hotspots, BLE beacons, Wi-Fi access points or Wi-Fi hotspots, Wi-Fi time-of-flight, and/or other suitable techniques for determining position.

Telephone device 600 can also include one or more network interfaces used to communicate with other devices, such as communication channels 120. The network interface(s) can include any suitable components for interfacing with one more networks, including for example, transmitters, receivers, ports, controllers, antennas, or other suitable components. As explained, connections between telephone device 600 and communication channels 120 can include one or more networks, such as one or more carrier networks and/or internal party networks, and/or one or more switches, routers, etc.

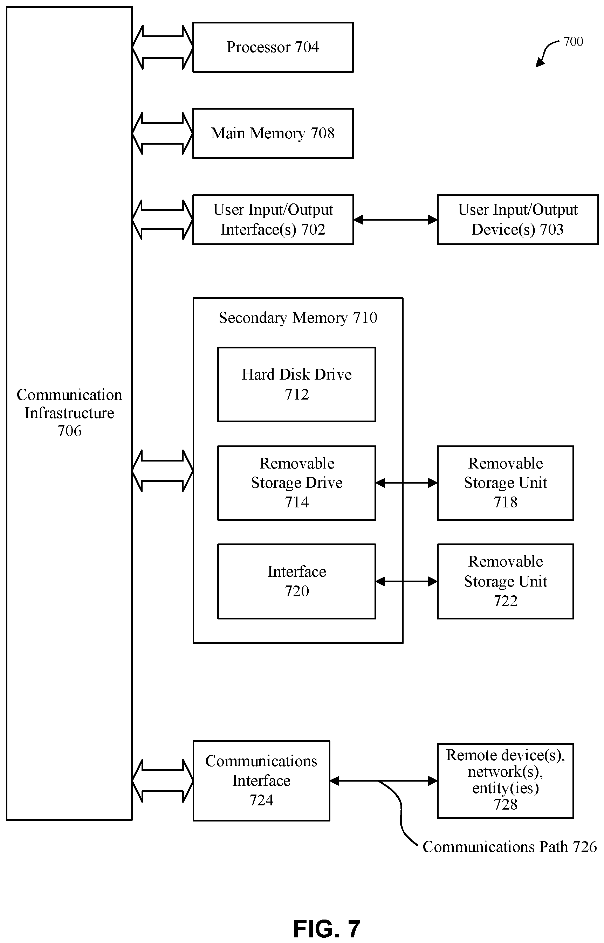

Various aspects can be implemented, for example, using one or more computer systems, such as computer system 700 shown in Figure 7. Computer system 700 can be any well-known computer capable of performing the functions described herein such as devices 140 and 150 of Figure 1. Computer system 700 includes one or more processors (also called central processing units, or CPUs), such as a processor 704. Processor 704 is connected to a communication infrastructure 706 (e.g., a bus.) Computer system 700 also includes user input/output device(s) 703, such as monitors, keyboards, pointing devices, etc., that communicate with communication infrastructure 706 through user input/output interface(s) 702. Computer system 700 also includes a main or primary memory 708, such as random access memory (RAM). Main memory 708 may include one or more levels of cache. Main memory 708 has stored therein control logic (e.g., computer software) and/or data.

Computer system 700 may also include one or more secondary storage devices or memory 710. Secondary memory 710 may include, for example, a hard disk drive 712 and/or a removable storage device or drive 714. Removable storage drive 714 may be a floppy disk drive, a magnetic tape drive, a compact disk drive, an optical storage device, tape backup device, and/or any other storage device/drive.

Removable storage drive 714 may interact with a removable storage unit 718. Removable storage unit 718 includes a computer usable or readable storage device having stored thereon computer software (control logic) and/or data. Removable storage unit 718 may be a floppy disk, magnetic tape, compact disk, DVD, optical storage disk, and/ any other computer data storage device. Removable storage drive 714 reads from and/or writes to removable storage unit 718 in a well-known manner.

According to some aspects, secondary memory 710 may include other means, instrumentalities or other approaches for allowing computer programs and/or other instructions and/or data to be accessed by computer system 700. Such means, instrumentalities or other approaches may include, for example, a removable storage unit 722 and an interface 720. Examples of the removable storage unit 722 and the interface 720 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 700 may further include a communication or network interface 724. Communication interface 724 enables computer system 700 to communicate and interact with any combination of remote devices, remote networks, remote entities, etc. (individually and collectively referenced by reference number 728). For example, communication interface 724 may allow computer system 700 to communicate with remote devices 728 over communications path 726, which may be wired and/or wireless, and which may include any combination of LANs, WANs, the Internet, etc. Control logic and/or data may be transmitted to and from computer system 700 via communication path 726.

The operations in the preceding aspects can be implemented in a wide variety of configurations and architectures. Therefore, some or all of the operations in the preceding aspects may be performed in hardware, in software or both. In some aspects, a tangible, non-transitory apparatus or article of manufacture includes a tangible, non-transitory computer useable or readable medium having control logic (software) stored thereon is also referred to herein as a computer program product or program storage device. This includes, but is not limited to, computer system 700, main memory 708, secondary memory 710 and removable storage units 718 and 722, as well as tangible articles of manufacture embodying any combination of the foregoing. Such control logic, when executed by one or more data processing devices (such as computer system 700), causes such data processing devices to operate as described herein.

Based on the teachings contained in this disclosure, it will be apparent to persons skilled in the relevant art(s) how to make and use aspects of the disclosure using data processing devices, computer systems and/or computer architectures other than that shown in Figure 7. In particular, aspects may operate with software, hardware, and/or operating system implementations other than those described herein.

The technology discussed herein makes reference to servers, databases, software applications, and other computer-based systems, as well as actions taken and information sent to and from such systems. One of ordinary skill in the art will recognize that the inherent flexibility of computer-based systems allows for a great variety of possible configurations, combinations, and divisions of tasks and functionality between and among components. For instance, server processes discussed herein may be implemented using a single server or multiple servers working in combination. Databases and applications may be implemented on a single system or distributed across multiple systems. Distributed components may operate sequentially or in parallel.

While the present subject matter has been described in detail with respect to specific example embodiments thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the spirit and scope of the present disclosure. Additionally, the discussion of the preceding embodiments is not intended to limit the present disclosure. Thus, the present disclosure is not intended to be limited to the embodiments shown, but is to be accorded the widest scope consistent with the principles and features disclosed herein.

### Embodiments are described in the following numbered clauses

1. A method comprising:
   receiving, by a display optimization engine platform, from an enterprise an indication of a requested communication between the enterprise and a communications device associated with a consumer of the enterprise;
   in response to receiving the requested communication, perform the following:
      selecting, by the display optimization engine platform, from a database, branding elements associated with the enterprise, the selecting being based at least in part on characteristics of the consumer;
      selecting, by the display optimization engine platform, a communications channel for provision of the branding elements based on a rule; and
      sending, by the display optimization engine platform, the branding elements to the communications channel for rendering on the communications device with the requested communication.
2. The method of clause 1, wherein the rule is based, at least in part, on at least one of (i) modifications to the branding elements by the communications channel, and (ii) a routing efficiency of the communications channel.
3. The method of clause 1 or 2, wherein the selecting the communications channel includes selecting a plurality of communications channels for provision of the branding elements based on the rule, and
   wherein the sending the branding elements includes sending the branding elements using the plurality of communications channels for simultaneous rendering on the communications device.
4. The method of any of the previous clauses, wherein the communications device includes a plurality of communications devices, each of the plurality communications device being associated with the consumer, and
   wherein the sending the branding elements includes sending the branding elements to the plurality of communications devices.
5. The method of any of the previous clauses, wherein at least one of (i) the rule is a composite rule based on a combination of individual rules and (ii) the rule includes logic based on one or more of artificial intelligence-based decision making or learned experience.
6. The method of any of the previous clauses, wherein selecting the branding elements is further based, at least in part, on at least one of (i) characteristics associated with the communications channel and (ii) capabilities of the communications device.
7. The method of any of the previous clauses, wherein the requested communication is a at least one of (i) telephone call or a Voice Over IP (VoIP) call, and (ii) a multimedia message.
8. An apparatus, comprising:
   memory;
   one or processors couple to the memory, the memory storing instructions that when executed by the one or more processors cause the one or more processors to:
      receive, by a display optimization engine platform, from an enterprise an indication of a requested communication between the enterprise and a communications device associated with a consumer of the enterprise;
      in response to receiving the requested communication, perform the following:
         select, by the display optimization engine platform, from a database, branding elements associated with the enterprise, the selecting being based at least in part on characteristics of the consumer;
         select, by the display optimization engine platform, a communications channel for provision of the branding elements based on a rule; and
         send, by the display optimization engine platform, the branding elements to the communications channel for rendering on the communications device with the requested communication.
9. The apparatus of clause 8, wherein the rule is based, at least in part, on at least one of (i) modifications to the branding elements by the communications channel and (ii) a routing efficiency of the communications channel.
10. The apparatus of clause 8 or 9, wherein the instructions further include additional instructions that when executed by the one or more processors cause the one or more processors to select the communications channel by including selecting a plurality of communications channels for provision of the branding elements based on the rule, and
   to send the branding elements by including sending the branding elements using the plurality of communications channels for simultaneous rendering on the communications device.
11. The apparatus of clause 10, wherein the communications device includes a plurality of communications devices, each of the plurality of communications devices being associated with the consumer, and
   wherein the instructions further include additional instructions that when executed by the one or more processors cause the one or more processors to send the branding elements by including sending the branding elements to the plurality of communications devices.
12. The apparatus of any of clauses 8 to 11, wherein the rule is a composite rule based on a combination of individual rules.
13. The apparatus of clause 12, wherein selecting the branded display is further based, at least in part, on at least one of (i) technical specifications associated with the communications channel and (ii) technical capabilities of the communications device.
14. The apparatus of any of clauses 8 to 13, wherein the requested communication is at least one of (i) a telephone call or a Voice Over IP (VoIP) call and (ii) a text message or a multimedia message.

## Claims

1. A method comprising:
receiving, by a display optimization engine platform, from an enterprise an indication of a requested communication between the enterprise and a communications device associated with a consumer of the enterprise;
in response to receiving the requested communication, perform the following:
selecting, by the display optimization engine platform, from a database, branding elements associated with the enterprise, the selecting being based at least in part on characteristics of the communications device associated with the consumer;
selecting, by the display optimization engine platform, a communications channel from a choice of communication channels, for provision of the branding elements based on an optimal choice of channel bandwidth and/or channel latency to carry the branding elements;
sending, by the display optimization engine platform, the branding elements to the communications channel for rendering on the communications device with the requested communication; and
receiving, by the display optimization engine platform, feedback information from the communications device, the feedback information being provided by use of an application on the communications device.

2. The method of claim 1, wherein the rule is further based, at least in part, on at least one of (i) modifications to the branding elements by the communications channel, and (ii) a routing efficiency of the communications channel.

3. The method of claim 1 or 2, wherein the selecting the communications channel includes selecting a plurality of communications channels for provision of the branding elements based on the rule, and
wherein the sending the branding elements includes sending the branding elements using the plurality of communications channels for simultaneous rendering on the communications device.

4. The method of any of the previous claims, wherein the communications device includes a plurality of communications devices, each of the plurality communications device being associated with the consumer, and
wherein the sending the branding elements includes sending the branding elements to the plurality of communications devices.

5. The method of any of the previous claims, wherein at least one of (i) the rule is a composite rule based on a combination of individual rules and (ii) the rule further includes logic based on one or more of artificial intelligence-based decision making or learned experience.

6. The method of any of the previous claims, wherein selecting the branding elements is further based, at least in part, on at least one of (i) technical transmission throughput characteristics associated with the communications channel, the technical transmission throughput characteristics including a bandwidth of the communications channel and (ii) display capabilities of the communications device.

7. The method of any of the previous claims, wherein the requested communication is a at least one of (i) telephone call or a Voice Over IP (VoIP) call, and (ii) a multimedia message.

8. An apparatus, comprising:
memory;
one or processors couple to the memory, the memory storing instructions that when executed by the one or more processors cause the one or more processors to:
receive, by a display optimization engine platform, from an enterprise an indication of a requested communication between the enterprise and a communications device associated with a consumer of the enterprise;
in response to receiving the requested communication, perform the following:
select, by the display optimization engine platform, from a database, branding elements associated with the enterprise, the selecting being based at least in part on characteristics of the communications device associated with the consumer;
select, by the display optimization engine platform, a communications channel from a choice of communication channels, for provision of the branding elements based on an optimal choice of channel bandwidth and/or channel latency to carry the branding elements;
send, by the display optimization engine platform, the branding elements to the communications channel for rendering on the communications device with the requested communication; and
receive, by the display optimization engine platform, feedback information from the communications device, the feedback information being provided by use of an application on the communications device.

9. The apparatus of claim 8, wherein the rule is further based, at least in part, on at least one of (i) modifications to the branding elements by the communications channel and (ii) a routing efficiency of the communications channel.

10. The apparatus of claim 8 or 9, wherein the instructions further include additional instructions that when executed by the one or more processors cause the one or more processors to select the communications channel by including selecting a plurality of communications channels for provision of the branding elements based on the rule, and
to send the branding elements by including sending the branding elements using the plurality of communications channels for simultaneous rendering on the communications device.

11. The apparatus of claim 10, wherein the communications device includes a plurality of communications devices, each of the plurality of communications devices being associated with the consumer, and
wherein the instructions further include additional instructions that when executed by the one or more processors cause the one or more processors to send the branding elements by including sending the branding elements to the plurality of communications devices.

12. The apparatus of any of claims 8 to 11, wherein the rule is a composite rule based on a combination of individual rules.

13. The apparatus of claim 12, wherein selecting the branded display is further based, at least in part, on at least one of (i) technical specifications associated with the communications channel, the technical transmission throughput specifications including a bandwidth of the communications channel and (ii) display capabilities of the communications device.

14. The apparatus of any of claims 8 to 13, wherein the requested communication is at least one of (i) a telephone call or a Voice Over IP (VoIP) call and (ii) a text message or a multimedia message.
